# EUROPEAN PATENT APPLICATION

(11) **EP 3 823 135 A1**
(43) Date of publication of application: **19.05.2021**
(21) Application number: 20206090.1
(22) Date of filing: 06.11.2020
(51) Int. Cl.: H02K 1/14, H02K 1/18, H02K 3/24, H02K 5/128, H02K 9/19, H02K 15/12, H02K 7/14

(54) **FLUID PUMP**

(30) Priority: 14.11.2019 DE 102019130717
(71) Applicant: FTE automotive GmbH, 96106 Ebern (DE)
(72) Inventor: SAUTER, Anton, 96106 Ebern (DE)
(74) Representative: Cardon, Nicolas

(57) **Abstract**

A fluid pump (10) is described, in particular an oil pump for supply to a clutch actuator, a gearbox actuator, a lubrication system and/or a cooling system of a drive train, with an electrical drive unit (18) with a stator (22) and a rotor (24). The rotor (24) is arranged inside the stator (22) and an inner wall (30) delimiting the stator chamber (22a) radially inwardly has at least one wall portion (30a) which engages in an assigned radial depression (22c) of the stator (22) present between two circumferentially adjacent stator segments (22b). Furthermore, a method for producing a fluid pump (10) is proposed.

## Description

The invention concerns a fluid pump, in particular an oil pump for supply to a clutch actuator, a gearbox actuator, a lubrication system and/or a cooling system of a drive train, with an electrical drive unit which comprises a stator and a rotor that is rotatable about a rotor axis, wherein the stator is arranged in an annular stator chamber of a drive housing, and the rotor is arranged in a rotor chamber which is separate from the stator chamber and lies inside the stator chamber.

The invention also concerns a method for producing a fluid pump, in particular an oil pump, with an electrical drive unit which comprises a stator and a rotor that is rotatable about a rotor axis.

Such fluid pumps are known from the prior art and are often fitted to motor vehicles, in particular cars. They are also often known as electric fluid pumps.

For example, EP 3 179 106 A1 discloses a known fluid pump.

So that the high quantities required in particular in the automotive sector can be produced at low cost and in consistently high quality, in general simple production of such fluid pumps as required. In particular, the rotor and stator must be arranged reliably and precisely inside the fluid pump so as to be able to guarantee a high efficiency and long service life of the electrical drive unit.

In this context, it is an object of the invention to provide a fluid pump which can be mounted particularly easily. In particular, the components of the electrical drive unit must be able to be mounted precisely and easily.

This object is achieved by a fluid pump of the type described initially, in which an inner wall delimiting the stator chamber radially inwardly has at least one wall portion which engages in an assigned radial depression of the stator present between two circumferentially adjacent stator segments. A stator segment may comprise a stator pole or a stator winding. In this way, the stator is secured against twisting relative to the wall portion. It thus assumes a predefined position inside the stator chamber. The wall portion and the stator here make a form-fit connection in the circumferential direction. In the axial direction, the stator can easily be moved relative to the inner wall. Thus the stator can be mounted easily and precisely inside the fluid pump.

In this context, the wall portion could also be described as a radial protrusion.

The basic concept of the present invention is thus to use the radial depressions, often present in stators between individual stator segments, for the purpose of rotational positioning inside the drive housing.

Preferably, the rotor is received in a rotor chamber which is separated fluid-tightly from the stator received in the stator chamber. The rotor chamber may be formed by an interior of a rotor pot. Such a rotor pot is an element which has wall portion substantially in the form of a cylinder casing, which could also be described as a pot wall, and a base portion or pot base axially closing the cylinder-casing-shaped wall portion. Such a rotor pot separates so-called wet regions, i.e. those coming into contact with the fluid to be pumped, and dry regions, i.e. those not coming into contact with the fluid to be pumped, inside the drive unit. Here, the rotor is situated in a wet region and the stator in a dry region.

According to one embodiment, the inner wall delimiting the stator chamber radially inwardly has several circumferentially distributed wall portions, wherein each of the wall portions engages in an assigned radial depression of the stator present between circumferentially adjacent stator segments. The rotational positioning of the stator thus takes place via several pairs of a radial depression and a wall portion. Thus the stator is positioned particularly reliably and precisely.

The wall portion may be a radial bulge of the inner wall, or the wall portions may be radial bulges of the inner wall, in particular wherein the radial bulges extend over an entire axial length of the inner wall. Radial bulges are easy to produce and save material in comparison with radial protrusions applied onto the inner wall. Accordingly, such a fluid pump can be produced easily and cheaply.

Advantageously, the radial bulge forms or the radial bulges form a corresponding radial recess or corresponding radial recesses on a side of the inner wall facing the rotor chamber. In this way, the intermediate wall can be produced with minimum material usage. In particular, forming or moulding production processes may be used for this. A thickness of the inner wall may be here kept constant, which is advantageous for production.

A substantially axially running coolant channel may be formed in each of the wall portions, in particular wherein the coolant channels are radially open in the direction of the rotor chamber. The axial direction defined by the rotor axis. Thus in a simple and compact fashion, coolant channels can be arranged inside the fluid pump. The fluid pump can be effectively cooled via the coolant channels since they run substantially through the core region of the drive unit. If the cooling channels are radially open in the direction of the rotor chamber, coolant can flow into the interior of the rotor chamber from the coolant channel, in particular over the entire axial length of the rotor pot. In this way, the rotor may be wetted with coolant in particular over its entire axial length, whereby it is efficiently cooled.

Preferably, the wall portion is rounded on its radial outside, in particular rounded over its entire axial length. In an axial section, the wall portion is thus formed as a part circle at its radially outer end. Thus the wall portion is easy to produce with standard production methods and machines. In addition, thus a comparatively large flow cross-section can be provided for any cooling channels. Furthermore, because of the partially circular form, the cooling channels can interact thermally with the stator chamber adjacent to the wall portion over a comparatively large area. This applies in particular in relation to the flow cross-section. This gives effective and reliable cooling of the fluid pump.

According to a variant, the stator chamber and rotor chamber are pot-like, wherein the stator chamber and rotor chamber are open on opposite axial sides. Thus a stator chamber and a rotor chamber can easily be defined. In a preferred embodiment, the stator chamber and rotor chamber are provided by a single component having a so-called double pot structure. This ensures a compact structure of the fluid pump.

Also, the stator may be embedded in the stator chamber by means of a casting compound. Thus the stator is mounted play-free in its defined mounting position. A movement of the stator inside the stator chamber is thus no longer possible. This gives a reliably functioning and durable fluid pump.

In a variant, the fluid pump is a gear pump, in particular an annular gear pump. Annular gear pumps are also known as gerotor pumps and are a type of gear pump which is particularly powerful and at the same time has a compact structure.

In addition, the object is achieved by a method of the type cited initially which comprises the following steps:
a) providing a stator with several stator segments distributed around the circumference of the stator, wherein a radial depression is formed between respective adjacent stator segments,
b) providing a drive housing with a stator chamber, wherein the stator chamber has wall portions corresponding to the radial depressions and protruding relative to a base contour of an inner wall delimiting the stator chamber,
c) aligning the stator relative to the drive housing such that each of the radial depressions lies opposite a corresponding wall portion in the axial direction,
d) inserting the stator in the drive housing, wherein the protruding wall portions engage in the assigned radial depressions.

The stator is thus mounted easily and quickly in a precise rotational position in the drive housing.

According to one embodiment, the stator is encapsulated inside the stator chamber. Thus the stator is fixed inside the stator chamber and can no longer move therein even during operation. Thus the fluid pump functions reliably.

The invention is explained below with reference to an exemplary embodiment shown in the attached drawings. The drawings show:
- Figure 1 a fluid pump according to the invention in a perspective external view,
- Figure 2 the fluid pump from figure 1 in a depiction cut along an axial plane, and
- Figure 3 a detail III of the fluid pump from figure 2.

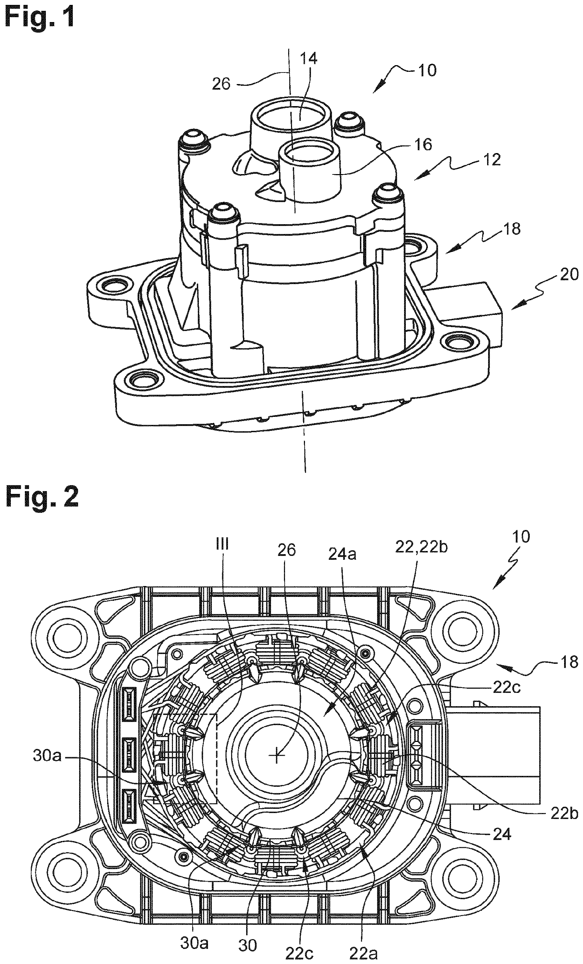

Figure 1 shows a fluid pump 10 which, in the embodiment shown, is formed as an oil pump for supplying a clutch actuator.

At the same time, the fluid pump 10 is also suitable for supplying oil to a gearbox actuator, a cooling system and/or a lubrication system of a drive train.

The fluid pump 10 is designed as an annular gear pump. It thus comprises a pump unit 12 which works on the principle of an annular gear pump.

By means of the pump unit 12, fluid provided to the fluid pump 10 via a fluid inlet 14 is conveyed to a fluid outlet 16 of the fluid pump 10. The fluid is pressurised, so the fluid inlet 14 may be described as the suction side and the fluid outlet 16 as the pressure side.

The pump unit 12 is driven by means of an electric drive unit 18 which is controlled by a control unit 20.

The electric drive unit 18 is arranged between the pump unit 12 and the control unit 20.

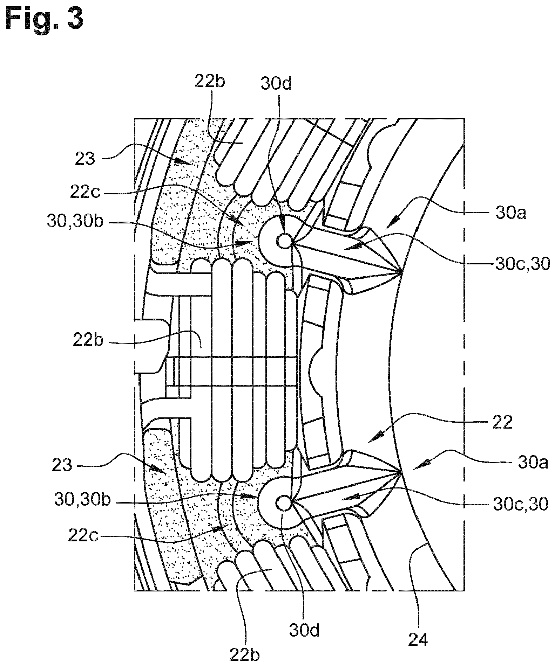

The electric drive unit 18 furthermore comprises a stator 22 and a rotor 24, depicted merely schematically in figure 2 and figure 3, which is rotatable about a rotor axis 26.

In this context, the stator 22 is arranged in an annular stator chamber 22a of a drive housing 28, and the rotor 24 is arranged in a rotor chamber 24a which is separate from the stator chamber 22a and lies inside this. The rotor chamber 24a thus lies in the interior of the ring shape. The rotor 24 is thus a so-called internal rotor.

Also, the stator 22 is encapsulated inside the stator chamber 22a by means of a casting compound 23. In other words, the stator 22 is embedded in the stator chamber 22a by means of the casting compound 23.

Both the rotor chamber 24a and the stator chamber 22a are formed pot-like, wherein the stator chamber 22a and the rotor chamber 24a are open on opposite axial sides. This so-called double pot form is configured as part of the drive housing.

The stator 22 comprises several stator segments 22b which are distributed around its circumference. Of the total of twelve stator segments 22b present in the embodiment according to figure 2, for reasons of clarity only a few are marked with a reference sign.

A radial depression 22c is provided between respective adjacent stator segments 22b.

The rotor chamber 24a and the stator chamber 22a are separated by an inner wall 30.

This inner wall 30 thus delimits the stator chamber 22a radially inwardly and the rotor chamber 24a radially outwardly.

It has a number of wall portions 30a corresponding to the number of radial depressions 22c of the stator 22 and formed as radial bulges 30b in the direction of the stator 22, which form corresponding radial recesses 30c in the direction of the rotor chamber 24a.

The radial bulges 30b and radial recesses 30c extend substantially over the entire axial length of the inner wall 30.

Each of the radial bulges 30b here engages in a respective assigned radial depression 22c of the stator 22, so that the stator 22 is mounted non-rotatably in the drive housing 28. For this, the radial bulges 30b and the radial depressions 22c create a form-fit connection acting in the circumferential direction.

Also, a coolant channel 30d running substantially axially is formed in each wall portion 30a and is radially open in the direction of the rotor chamber 24a. Via the coolant channels 30d, coolant can be conducted into the rotor chamber 24a so that the electrical drive unit 18 is cooled. This applies in particular to the rotor 24.

Furthermore, the wall portions 30a are rounded at their radial outsides. In the sectional depictions of figures 2 and 3, the radial outsides of the wall portions 30a thus take the form of part circles.

Thus the axially running coolant channels 30d may firstly be equipped with a comparatively large flow cross-section.

Secondly, the cooling channels 30d have a comparatively large surface area because of the rounded form of the wall portions 30a, so that a heat exchange between the coolant flowing in the cooling channels 30d and the stator chamber 22 is promoted.

The fluid pump 10 may be produced as follows.

Firstly, the stator 22 with the circumferentially distributed stator segments 22b and the radial depressions 22c lying in between is produced.

Also, the drive housing 28 is produced in which the stator chamber 22a is present.

As already explained, the stator chamber 22a is delimited radially inwardly by the inner wall 30, and the inner wall 30 has wall portions which protrude relative to a base contour. These wall portions 30a are designed as radial bulges 30a on the stator side.

Now the stator 22 is aligned relative to the drive housing 28 so that each of the radial depressions 22c along the rotor axis 26 lies opposite a corresponding wall portion 30a, i.e. a corresponding radial bulge 30b.

Then the stator is inserted into the drive housing 28 along the rotor axis 26, wherein the protruding wall portions 30a in the form of radial bulges 30b engage in the assigned radial depressions 22c.

Finally, the stator 22 is encapsulated in the stator chamber 22a by means of a casting compound 23.

## Claims

1. Fluid pump (10), in particular oil pump for supply to a clutch actuator, a gearbox actuator, a lubrication system and/or a cooling system of a drive train, with an electrical drive unit (18) which comprises a stator (22) and a rotor (24) that is rotatable about a rotor axis (26), wherein the stator (22) is arranged in an annular stator chamber (22a) of a drive housing (28), and the rotor (24) is arranged in a rotor chamber (24a) which is separate from the stator chamber (22a) and lies inside the stator chamber (22a), **characterized in that** an inner wall (30) delimiting the stator chamber (22a) radially inwardly has at least one wall portion (30a) which engages in an assigned radial depression (22c) of the stator (22) present between two circumferentially adjacent stator segments (22b).

2. Fluid pump (10) according to claim 1, **characterized in that** the inner wall (30) delimiting the stator chamber (22a) radially inwardly has several circumferentially distributed wall portions (30a), wherein each of the wall portions (30a) engages in an assigned radial depression (22c) of the stator (22) present between circumferentially adjacent stator segments (22b).

3. Fluid pump (10) according to claim 1 or 2, **characterized in that** the wall portion (30a) is a radial bulge (30b) of the inner wall (30), or the wall portions (30a) are radial bulges (30b) of the inner wall (30), in particular wherein the radial bulges (30b) extend over an entire axial length of the inner wall (30).

4. Fluid pump (10) according to claim 3, **characterized in that** the radial bulge (30b) forms or the radial bulges (30b) form a corresponding radial recess (30c) or corresponding radial recesses (30c) on a side of the inner wall (30) facing the rotor chamber (24a).

5. Fluid pump (10) according to any of the preceding claims, **characterized in that** a substantially axially running coolant channel (30d) is formed in each of the wall portions (30a), in particular wherein the coolant channels (30d) are radially open in the direction of the rotor chamber (24a).

6. Fluid pump (10) according to any of the preceding claims, **characterized in that** the wall portion (30a) is rounded on its radial outside, in particular is rounded over its entire axial length.

7. Fluid pump (10) according to any of the preceding claims, **characterized in that** the stator chamber (22a) and the rotor chamber (24a) are pot-like, wherein the stator chamber (22a) and the rotor chamber (24a) are open on opposite axial sides.

8. Fluid pump (10) according to any of the preceding claims, **characterized in that** the stator (22) is embedded in the stator chamber (22a) by means of a casting compound (23).

9. Fluid pump (10) according to any of the preceding claims, **characterized in that** the fluid pump (10) is a gear pump, in particular an annular gear pump.

10. Method for producing a fluid pump (10), in particular an oil pump, with an electric drive unit (18) which comprises a stator (22) and a rotor (24) that is rotatable about a rotor axis (26), **characterized by** the following steps:
a) providing a stator (22) with several stator segments (22b) distributed around the circumference of the stator (22), wherein a radial depression (22c) is formed between respective adjacent stator segments (22b),
b) providing a drive housing (28) with a stator chamber (22a), wherein the stator chamber (22a) has wall portions (30a) corresponding to the radial depressions (22c) and protruding relative to a base contour of an inner wall (30) delimiting the stator chamber (22a),
c) aligning the stator (22) relative to the drive housing (28) such that each of the radial depressions (22c) lies opposite a corresponding wall portion (30a) in the axial direction,
d) inserting the stator (22) in the drive housing (28), wherein the protruding wall portions (30a) engage in the assigned radial depressions (22c).

11. Method according to claim 9, **characterized in that** the stator (22) is encapsulated inside the stator chamber (22).
